# EUROPÄISCHE PATENTSCHRIFT

(11) **EP 0 278 402 B1**
(45) Veröffentlichungstag und Bekanntmachung des Hinweises auf die Patenterteilung: **04.08.1993**
(21) Anmeldenummer: 88101617.4
(22) Anmeldetag: 04.02.1988
(51) Int. Cl.: B29C 49/02

(54) **Vorrichtung zum Herstellen eines Kunststoff-Hohlkörpers, die einen verschiebbaren Dorn aufweist**
Apparatus comprising a slidable mandrel for the manufacture of hollow plastics objects
Dispositif à mandrin coulissant pour la fabrication de corps creux en matière plastique

(30) Priorität: 12.02.1987 DE 3704265
(43) Veröffentlichungstag der Anmeldung: 17.08.1988
(73) Patentinhaber: OSSBERGER-TURBINENFABRIK GMBH & CO., 91781 Weissenburg (DE)
(72) Erfinder: Linsz, Gerhard, Ing., D-8832 Weissenburg/Bay (DE); Ossberger, Karl-Friedrich, Dr., D-8832 Weissenburger/Bay (DE)
(74) Vertreter: Böhme, Volker, Dipl.-Ing.

(56) Entgegenhaltungen:
- DE-A- 2 528 964
- FR-A- 2 443 327
- US-A- 2 982 993
- US-A- 3 343 210
- US-A- 4 178 976
- US-A- 4 188 179
- PATENT ABSTRACTS OF JAPAN, Band 10, Nr. 261 (M-514)[2317], 5. September 1986; & JP-A-61 086 234 (MITSUI) 01-05-1986

## Beschreibung

Die Erfindung betrifft eine Vorrichtung zum Herstellen eines Hohlkörpers aus thermoplastischem Kunststoff durch Spritzgießen gemäß dem Oberbegriff des Anspruchs 1.

Bei einer bekannten (DE-PS 25 28 029 und US-A-4 188 179) Vorrichtung dieser Art wird der Vorformling-Abschnitt nur zur Bildung des Bodens von Bodenstücken der Blasformteile gepreßt und dann aufgeblasen, wobei die ringspaltartige Düsenöffnung mit dem Außenrand der der Ringdüse zugewandten öffnung der Ausnehmung abschließt, dieser Außenrand auch der Außenrand der Kopfstück-Höhlung der Ausnehmung ist und die ringspaltartige Düsenöffnung in gerader Fortsetzung des Vorformling-Rohrabschnittes vor jedem Aufblasen liegt. Diese Vorrichtung läßt eine Vielzahl von Möglichkeiten der Gestaltung des Körperteiles des Hohlkörpers nicht zu.

Eine Aufgabe der Erfindung besteht darin, eine Vorrichtung der eingangs genannten Art zu schaffen, bei der der Außendurchmesser des Körperteiles des hergestellten Hohlkörpers bereichsweise kleiner als der Durchmesser des ausgepreßten, nicht aufgeblasenen Rohrabschnittes ist. Die erfindungsgemäße Vorrichtung ist, diese Aufgabe lösend, dadurch gekennzeichnet, daß ein hin-und herverschiebbarer Dorn mit einem Formfortzsatz zwischen den Vorformling-Abschnitt gegen den Formfortsatz drückende, vorspringende Bereiche der geschlossenen Blasformteile ragt und die ringspaltartige Düsenöffnung gegenüber der Außenkontur des Formfortsatzes radial nach außen versetzt ist.

Der Formfortsatz wird nach dem Auspressen vorgeschoben und dient als Werkzeug zur Gestaltung der Innenform des Körperteil-Bereiches verringerten Durchmessers sowie als Widerlager für das Zusammenpressen eines Bereiches des rohrartigen Vorformlings mittels der Blasformteile. Wenn die Blasformteile zusammengefahren sind, drücken sie mit den vorspringenden Bereichen den Vorformling gegen den Formfortsatz. Es wird also Außendurchmesser verringert und nicht aufgeblasen. Der Formfortsatz kann von der Abzugseinrichtung oder von der Ringdüse her eingeschoben werden. Er bestimmt die Wanddicke und die Bodendicke.

Besonders zweckmäßig und vorteilhaft ist es, wenn der hin- und herverschiebbare Dorn die Blaseinrichtung mit Blasöffnung bildet. Obwohl der Dorn der Verschiebung des Formfortsatzes dient, ist er auch in die Blaseinrichtung integriert.

Besonders zweckmäßig und vorteilhaft ist es auch, wenn dem Formfortsatz entgegen ein hin- und herverschiebbarer Stempel eingebaut ist und ein Vorformlingsbereich zwischen den freien Enden von Formfortsatz und Stempel preßbar ist. Der ausgepreßte Vorformling läßt sich auch in axialer Richtung durch Pressen formen.

Besonders zweckmäßig und vorteilhaft ist es dabei, wenn der Formfortsatz an der Abzugseinrichtung und der Stempel an der Ringdüse vorgesehen ist. Dies ermöglicht einen bodenseitig geschlossenen und für den Formfortsatz kopfstückseitig offenen Hohlkörper.

Besonders zweckmäßig und vorteilhaft ist es ebenso, wenn der Formfortsatz auch bei auf der Ringdüse aufsitzender Abzugseinrichtung in Achsrichtung vorragt und in eine der beiden genannten Einrichtungen hineingeschoben ist. Der Formfortsatz ragt also, wenn er an der Abzugseinrichtung angebracht ist, in die Ringdüse und, wenn er an der Ringdüse angebracht ist, in die Abzugseinrichtung. Es ist also kein Antrieb nötig, um den Formfortsatz in die Einrichtung, an der er vorgesehen ist, zurückzuziehen.

Vor dem Aufblasen wird eine weitere Formung des Vorformling-Abschnittes vorgenommen, damit aus dem so geformten Vorformling-Abschnitt ein entsprechend besonders gestalteter Hohlkörper wird, der bisher nur durch Auspressen aus der Düsenöffnung und durch Aufblasen in die Blasform geformt wird. Dadurch, daß die Düsenöffnung im Vergleich mit der bekannten Vorrichtung einen besonderen Versatz relativ zu anderen Teilen der Vorrichtung aufweist, werden besondere Gestaltungen des Vorformling-Abschnittes vor dem Aufblasen erreicht.

Eine weitere Aufgabe der Erfindung besteht darin, eine Vorrichtung der eingangs genannten Art zu schaffen, mit der ein Hohlkörper herstellbar ist, dessen Körperteil einerseits mit dem Außenrand des Kopfstückes fluchtet und andererseits doch geblasen ist. Die erfindungsgemäße Vorrichtung ist, diese Aufgabe lösend, dadurch gekennzeichnet, daß die ringspaltartige Düsenöffnung gegenüber dem Außenrand der der Ringdüse zugewandten Öffnung der Aufnehmung radial nach innen versetzt ist und die geschlossenen Blasformteile den die Düsenöffnung nach außen überragenden Bereich der Ausnehmungs-öffnung freilassen.

Es wird ein gespritztes Kopfstück hergestellt, dessen Durchmesser zur Ringdüse hin größer ist als der gepreßte rohrartige Vorformling. Der Vorformling wird wie üblich aufgeblasen, um eine dünne Wandstärke zu erzielen und Kunststoff zu sparen. Wenn der Durchmesser des Hohlkörpers bei vorgegebenem Durchmesser des Kopfstükkes vorgegeben ist, so kann durch den erfindungsgemäß vorgesehenen Versatz eine verstärkte Aufweitung durch das Aufblasen erreicht werden. Der geblasene Bereich des Vorformlings legt sich an das gespritzte Kopstück und verschweißt mit diesem. Der geblasene Bereich des Vorformlings ist außen ohne besondere Maßnahmen ausreichend heiß, um mit dem gespritzten Kopfstück fest zu verschweißen, wobei er durch das Blasen der Vorformling ausreichend fest an das Kopfstück gedrückt wird.

Besonders zweckmäßig und vorteilhaft ist es, wenn die Innenwand der geschlossenen Blasformteile an den Außenrand der der Ringdüse zugewandten Ausnehmungs-öffnung anschließt. Es werden Hohlkörper, z.B. Patronen hergestellt, bei denen der Außendurchmesser des Körperteiles gleich dem Außendurchmesser des gespritzten Kopfstückes ist, wobei ein Aufblasen und eine Wanddickenverringerung des rohrförmigen Bereiches des Vorformlings erfolgt ist.

Besonders zweckmäßig und vorteilhaft ist es, wenn die Innenwand der geschlossenen Blasformteile von dem Außenrand der ringspaltartigen Düsenöffnung Abstand aufweist. Es wird ein Hohlkörper-Körperteil ohne Boden geformt, indem der rohrartige Bereich des Vorformlings sich aufgrund Abscherung und Aufblasen von dem Kunststoff an der Düsenöffnung löst. Es kann der Außendurchmesser des Körperteiles zwischen Abzugseinrichtung und Ringdüse größer sein als der der Düsenöffnung.

Besonders zweckmäßig und vorteilhaft ist es auch, wenn bei auf der Ringdüse aufsitzende Abzugseinrichtung ein ringartiger Fortsatz der Ringdüse in die Ausnehmung ragt und in den ringartigen Fortsatz ein Zapfen der Abzugseinrichtung ragt. Aufgrund dieses ringartigen Fortsatzes und des Zapfens werden im Kopfstück Höhlungen erzeugt und wird Material gespart. Da die Düsenöffnung vom Äußeren des Fortsatzes nur wenig Abstand hat, wird der Fortsatz zum Auspressen des rohrartigen Vorformlings in die Ringdüse zurückgezogen, um ein Ankleben des Vorformlings am Fortsatz zu verhindern. Zwischen dem Zapfen und dem ringartigen Fortsatz wird eine Ringwand des Kopfstückes erzeugt.

Besonders zweckmäßig und vorteilhaft ist es sodann, wenn die Breite der ringspaltartigen Düsenöffnung beim Auspressen höchstens ebensogroß ist wie der Abstand des Außenrandes der Düsenöffnung vom Außenrand der der Ringdüse zugewandten öffnung der Ausnehmung. Diese Bemessung ergibt befriedigende Kunststoffersparnis bei haltbarer Verschweißung.

In der Zeichnung sind bevorzugte Ausführungsformen der Erfindung dargestellt und zeigt
- Fig. 1: schematisch in einem vertikalen Schnitt eine Vorrichtung zum Herstellen eines Kunststoff-Hohlkörpers,
- Fig. 2: in einem vertikalen Schnitt wesentliche Teile einer weiteren Vorrichtung zum Herstellen eines Kunststoff-Hohlkörpers, in einer ersten Betriebsstellung,
- Fig. 3: die Vorrichtung gemäß Fig. 2 in einer zweiten Betriebsstellung,
- Fig. 4: die Vorrichtung gemäß Fig. 2 in einer dritten Betriebsstellung,
- Fig. 5: in einem vertikalen Schnitt wesentliche Teile einer weiteren Vorrichtung zum Herstellen eines Kunststoff-Hohlkörpers, in einer ersten Betriebsstellung,
- Fig. 6: die Vorrichtung gemäß Fig. 5 in einer zweiten Betriebsstellung und
- Fig. 7: die Vorrichtung gemäß Fig. 5 in einer dritten Betriebsstellung.

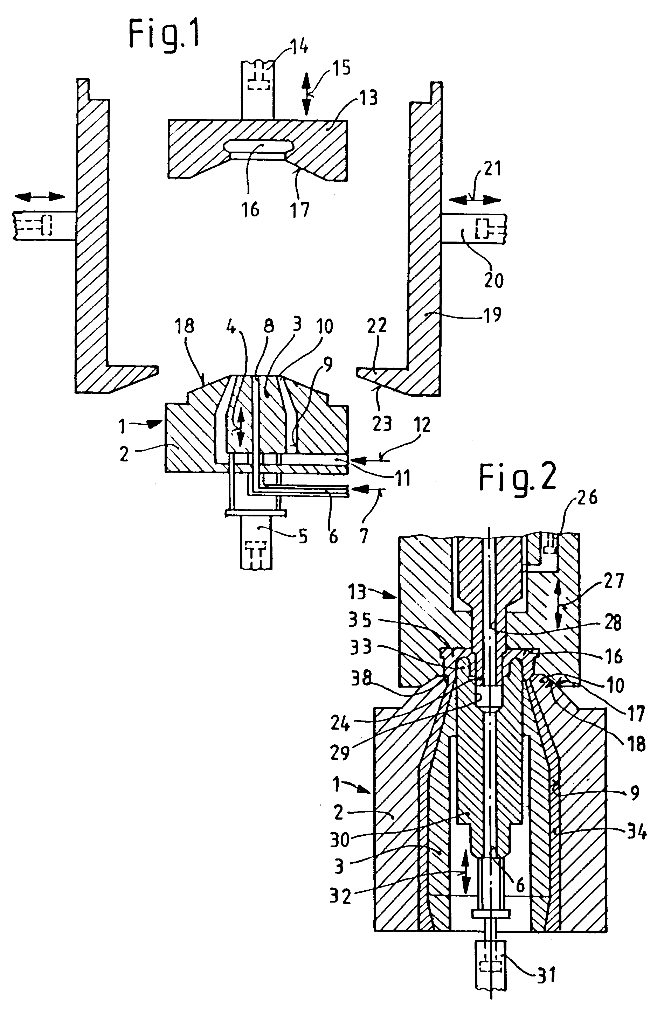

Die Vorrichtung gemäß Fig. 1 besitzt eine Ringdüse 1, die ein ortsfestes Düsenmundstück 2 umfaßt, in dem ein Düsenkegel 3 gemäß einem Doppelpfeil 4 mittels einer Kolben-Zylinder-Einrichtung 5 hin- und herbewegbar ist. Dem Düsenkegel 3 wird von hinten über eine Rohrleitung 6 gemäß einem Pfeil 7 Druckluft zugeführt, die den Düsenkegel 3 an der Vorderseite durch eine mittig angeordnete Blasöffnung 8 verläßt. Der Düsenkegel 3 und das Düsenmundstück 2 begrenzen zwischen sich einen Ringkanal 9, der nach vorne in eine ringspaltartige Düsenöffnung 10 übergeht und dem von hinten über eine Rohrleitung 11 gemäß einem Pfeil 12 thermoplastischer Kunststoff zugeführt wird. Zur Düsenöffnung 10 hin ist der Dusenkegel 3 unter einem geringeren Winkel konisch als die Innenwand des Düsenmundstückes, so daß die Düsenöffnung 10 abgesperrt wird, wenn der Düsenkegel 3 nach vorne geschoben wird.

Oberhalb der Ringdüse 1 ist eine Abzugseinrichtung 13 vorgesehen, die mittels einer Kolben-Zylinder-Einrichtung 14 gemäß einem Doppelpfeil 15 hin- und herbewegbar ist und die nach unten hin eine Ausnehmung 16 mit Hinterschnitt bzw. Hintergriff bildet, weshalb die Abzugseinrichtung in nicht näher gezeigter Weise teilbar und wieder zusammensetzbar ist. Die Abzugseinrichtung 13 weist eine radial schräg geneigte kreisringartige Auflagefläche 17 auf, die einer Stirnfläche 18 des Düsenmundstückes 2 angepaßt entspricht.

Beiderseits der Ringdüse 1 und der Abzugseinrichtung 13 ist je ein Blasformteil 19 einer zweiteiligen Blasform vorgesehen, das mittels einer Kolben-Zylinder-Einrichtung 20 gemäß einem Doppelpfeil 21 hin- und herbewegbar ist. Jedes Blasformteil 19 ist mit einem Bodenstück 22 versehen, das mit einer schrägen Auflagefläche 23 auf der Stirnfläche 18 des Düsenmundstückes 2 aufsitzen kann.

Die Vorrichtung gemäß Fig. 2 bis 4 ist in einem weiten Umfang so aufgebaut wie die gemäß Fig. 1, weshalb auf die vorhergehende Beschreibung und dort verwendeten Bezugszeichen verwiesen wird. Nachfolgend werden Abänderungen und Ergänzungen beschrieben, wozu ein Blaszapfen 24 der Abzugseinrichtung 13 gehört, der mittig in die Ausnehmung 16 ragt und aus dieser zur Ringdüse 1 hin herausragt. Der Blaszapfen 24 bildet in der Ausnehmung eine Abstufung und sitzt an einem Rohr 25, das mittels einer Kolben-Zylinder-Einrichtung 26 gemäß einem Doppelpfeil 27 hin- und herverstellbar ist. Es wird Blasluft über eine Bohrung 28 in Rohr 25 und Blaszapfen 24 zugeführt, so daß bei dieser Vorrichtung die Blasluft von der Seite der Abzugseinrichtung 13 und von der Seite der Ringdüse 1 zugeführt wird. Der Blaszapfen 24 ragt gemäß Fig. 2 bei auf der ringdüse 1 sitzender Abzugseinrichtung 13 in eine Bohrung 29 der Ringdüse, ohne diese Bohrung in axialer Richtung voll zu füllen. Durch den in die Bohrung 29 ragenden Blaszapfen 24 wird die Blasöffnung 8 beim Spritzen versperrt.

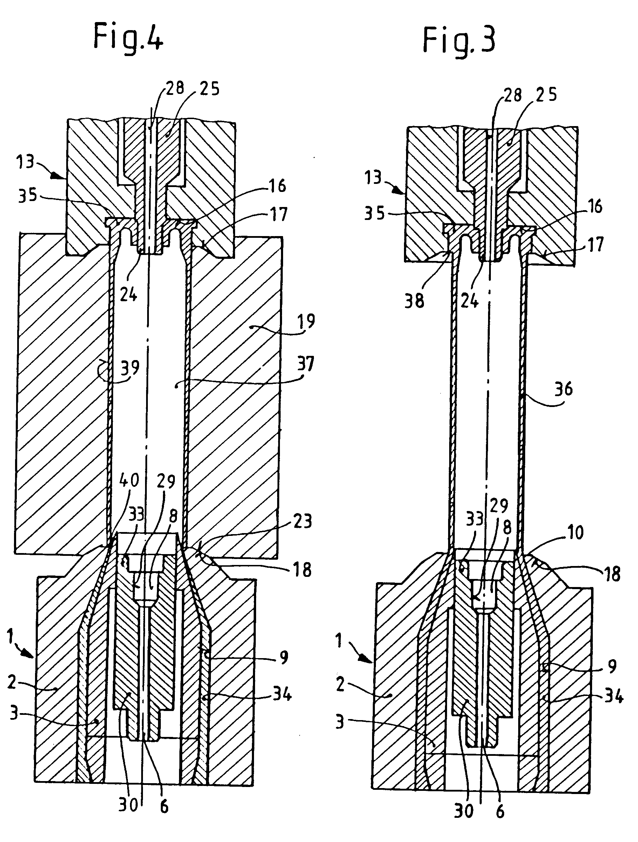

Bei der Vorrichtung gemäß Fig. 2 bis 4 nimmt der Düsenkegel 3 einen Dorn 30 auf, der mittels einer Kolben-Zylinder-Einrichtung 31 gemäß einem Doppelpfeil 32 hin- und herverstellbar ist und durch den die Rohrleitung 6 zur Blasöffnung 8 führt. Der Dorn 30 besitzt vorne einen ringartigen Fortsatz 33, der gemäß Fig. 2 in die Ausnehmung 16 und den Blaszapfen 24 aufnimmt. Gemäß Fig. 2 wird thermoplastischer Kunststoff 34 durch die Düsenöffnung 10 in die Ausnehmung 16 gespritzt, um ein Kopfstück 35 zu bilden. Gemäß Fig. 3 wird sodann ein rohrartiger Vorformling-Abschnitt 36 gezogen, wobei die Düsenöffnung 10 durch Vorschieben des Düsenkegels 3 etwas geschlossen ist. Gemäß Fig. 4 wird der Kunststoff in der Düsenöffnung 10 abgeschert, indem der Düsenkegel 3 voll vorgeschoben wird, der einen Konus mit weniger großem Konuswinkel als die Innenwand des Düsenmundstückes 2 bildet. Die Blasformteile 19 sind gegen die Abzugseinrichtung 13 und die Ringduse 19 gefahren und der Vorformling-Abschnitt ist zu einem Körperteil 37 eines Hohlkörpers aufgeblasen und gegen die Blasformteile 19 gelegt.

Wie Fig. 2 erkennen läßt, weist die Ausnehmung 16 eine der Ringdüse 1 zugewandte öffnung auf, die der Breite nach teilweise von der ringspaltartigen Düsenöffnung 10 überdeckt ist. Diese ist gegenüber dem Außenrand der öffnung der Ausnehmung 16 um einen Versatz 38 radial nach innen gerückt, wobei dieser von der Düsenöffnung 10 freigelassene Bereich der öffnung vom Düsenmundstück 2 abgedeckt ist. Gemäß Fig. 3 ist der Bereich des Versatzes 38 frei vom anschließenden Vorformling-Abschnitt. Dieser legt sich gemäß Fig. 4 beim Aufblaßen gegen den Versatz-Bereich, der von den Blasformteilen 19 freigelassen ist. Die Innenwand 39 schließt an den Außenrand der hier zur Rdde stehenden Ausnehmungs-öffnung an, so daß Kopfstück 35 und Körperteil 37 zylindrisch ineinander übergehen. Das Körperteil 37 ist bis zur Ringdüse 1 zylindrisch, da es sich von der geschlossenen Düsenöffnung gelöst hat und die Innenwand der geschlossenen Blasformteile von dem Düsenkegel und der Düsenöffnung 10 Abstand 40 aufweist.

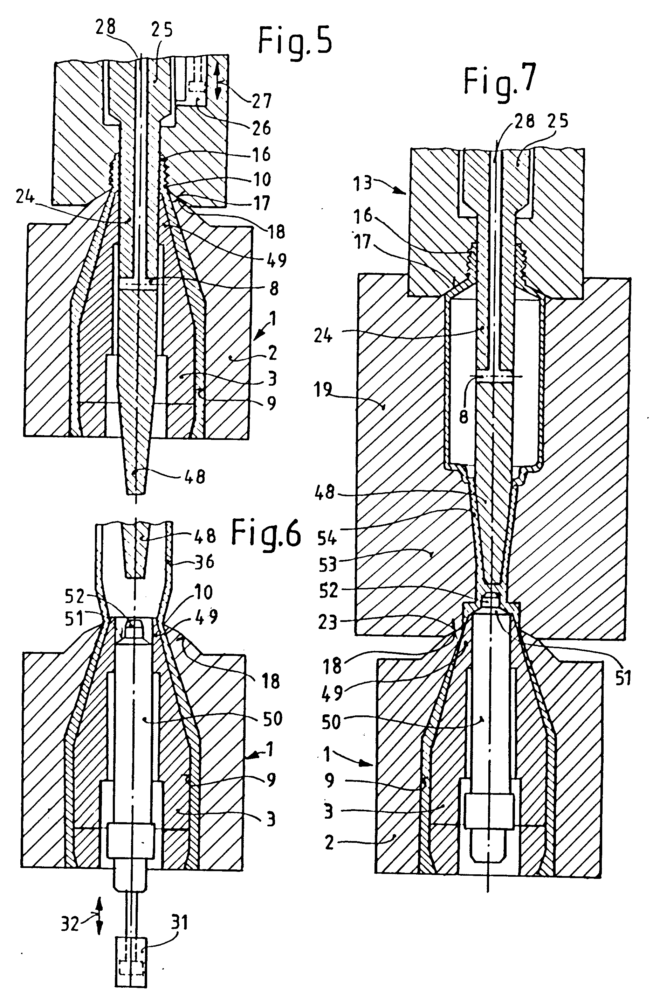

Die Vorrichtung gemäß Fig. 5 bis 7 ist in einem weiten Umfang so aufgebaut wie die gemäß Fig. 1, weshalb auf die diesbezügliche Beschreibung und dort verwendeten Bezugszeichen verwiesen wird. Nachfolgend werden Abänderungen und Ergänzungen beschrieben, wozu gehört, daß ein in der Abzugseinrichtung 13 vorgesehenes Rohr 25 mit einer Kolben-Zylinder-Einrichtung 26 gemäß einem Doppelpfeil 27 um eine beachtliche Wegstrecke hin- und herverschiebbar ist. Das Rohr 25 setzt sich nämlich mit einem Blaszapfen 24 fort, der nicht nur aus der Ausnehmung 16 herausragt, sondern gemäß Fig. 5 auch noch in die Ringdüse 1 und zwar in den Düsenkegel 3 weit hineinragt. Eine Blasluft-bohrung 28 weist seitliche Mündungen auf und der Blaszapfen 24 wird mit einem Fortsatz 48 fortgesetzt, der sich gemäß Fig. 5 tief in der Ringdüse 1 befindet. Der Durchmesser des Formfortsatzes 48 ist merklich geringer als der Innendurchmesser der ringspaltartigen Düsenöffnung 10 und der Querschnitt des Formfortsatzes 48 verjüngt sich in Richtung zur Ringdüse 1.

Es ist also die ringspaltartige Düsenöffnung 10 gegenüber den Außenkonturen des Formfortsatzes 48 um einen Versatz 49 radial nach außen versetzt. Die Blasformteile 19 weisen auf der der Ringdüse 1 zugewandten Seite vorspringende Bereiche 53 auf, die gemäß Fig. 7 bei geschlossener Blasform kurz vor dem Formfortsatz enden. Koaxial mit dem Formfortsatz 48 ist ein Stempel 50 vorgesehen, der der Ringdüse 1 zugeordnet ist und mittels einer Kolben-Zylinder-Einrichtung 31 gemäß einem Doppelpfeil 32 um eine beachtliche Wegstrecke hin- und herverschiebbar ist. Dieser Stempel 50 weist an der Stirnseite 51 einen Formfortsatz 52 auf und wird gemäß Fig. 6 und 7 mit dem Formansatz nach vorne und aus der Ringdüse 1 geschoben.

Gemäß Fig. 5 wird thermoplastischer Kunststoff 34 durch die voll geöffnete Düsenöffnung 10 in die Ausnehmung 16 gespritzt, wodurch ein Kopfstück 35 gebildet wird und wobei der Formfortsatz 48 sich an dem Blaszapfen 24 tief in der Ringdüse 1 befindet und die Abzugseinrichtung 13 auf der Ringdüse 1 aufsitzt. Gemäß Fig. 6 wird die Abzugseinrichtung 13 bei teilweise geöffneter Düsenöffnung 10, d.h. bei teilweise vorgeschobenem Düsenkegel 3 von der Ringdüse 1 wegbewegt, wobei ein rohrartiger Vorformling-Abschnitt 36 ausgezogen wird, in dessen der Ringdüse 1 zugewendeten Bereich sich der Formfortsatz 48 befindet, der mit nur geringem Abstand von der Ringdüse 1 endet. Es ist gemäß Fig. 6 auch der Stempel 50 soweit vorgeschoben, daß die Stirnseite 1 und der Formansatz 52 sich kurz vor der vorderen Stirnseite des Düsenkegels 1 befinden. Sodann wird gemäß Fig. 7 die Düsenöffnung 10 durch weiteres Vorschieben des Düsenkegels 3 unter Abscherung des Kunststoffes 34 geschlossen und werden die Blasformteile 19 zusammengefahren, wobei die vorspringenden Bereich 53 der Blasformteile 19 den Vorformling-Aschnitt gegen den Formfortsatz 48 pressen und hier eine gepreßte Hülse 54 mit einem Außendurchmesser herstellen, der kleiner ist als der Durchmesser der Ringdüse, und mit einer Wanddicke, die größer ist als die Wanddicke des Vorformling-Abschnittes 36. Es wird auch der Stempel 50 weiter vorgefahren, wodurch der zwischen dem Ende des Formfortsatzes 48 und der Stirnseite 51 des Stempels befindliche Kunststoff gepreßt wird.

## Patentansprüche

1. Vorrichtung zum Herstellen eines Hohlkörpers aus thermoplastischem Kunststoff,
mit einem durch Spritzgießen geformten Kopfstück und einem durch Blasen eines damit einstückigen Vorformling-Abschnittes geformten Körperteil, bei der eine Ringdüse (1) zwischen einem Düsenkegel (3) und einem Düsenmundstück (2) eine ringspaltartige Düsenöffnung (10) aufweist, bei der die Ringdüse (1) und eine Abzugseinrichtung (13) mit einer Ausnehmung (16) in axialer Richtung relativ gegeneinander hin- und herbewegbar sind,
bei der Blasformteile (19) einer mehrteiligen Blasforn seitlich hin- und herverschiebbar sind,
bei der ein hin- und herverschiebbarer Dorn (25) mit einem Fortsatz (48) vorgesehen ist und
bei der die ringspaltartige Düsenöffnung gegenüber der Außenkontur des Fortsatzes (48) radial nach außen versetzt ist,
**dadurch gekennzeichnet**, daß der Dorn (25) mit dem Fortsatz (48) zwischen dem Vorformling-Abschnitt zugeordneten Bereiche (53) der geschlossenen Blasformteile (19) ragt und die dem Fortsatz (48) zugeordneten Bereiche (53) der geschlossenen Blasformteile (19) jeweils gegenüber dem Rest des zugeordneten Blasformteiles (19) vorspringen,
daß der Fortsatz (48) bei den dem Vorformling-Abschnitt zugeordneten Bereichen (53) als Formwerkzeug zur Gestaltung der Innenform eines Körperteil-Bereiches mit einem relativ zum Vorformling-Durchmesser verringerten Durchmesser ausgebildet ist, und
daß bei geschlossenen Blasformteilen (19) die vorspringenden Bereiche (53) den Vorformling (36) gegen den Formfortzsatz (48) drücken.

2. Vorrichtung nach Anspruch 1, **dadurch gekennzeichnet**, daß der hin- und herverschiebbare Dorn (25) die Blaseinrichtung mit Blasöffnung (8) bildet.

3. Vorrichtung nach Anspruch 1 oder 2, **dadurch gekennzeichnet,** daß dem Formfortsatz (48) entgegen ein hin- und herschiebbarer Stempel (50) eingebaut ist und ein Vorformlings-Bereich zwischen den freien Enden von Formfortsatz (48) und Stempel (50) preßbar ist.

4. Vorrichtung nach Anspruch 3, **dadurch gekennzeichnet**, daß der Formfortsatz (48) an der Abzugseinrichtung und der Stempel (50) an der Ringdüse (1) vorgesehen ist.

5. Vorrichtung nach einem der vorhergehenden Ansprüche, **dadurch gekennzeichnet**, daß der Formfortsatz (48) auch bei auf der Ringdüse (1) aufsitzender Abzugseinrichtung (13) in Achsrichtung vorragt und in eine der beiden genannten Einrichtungen hineingeschoben ist.

6. Vorrichtung nach einem der vorhergehenden Ansprüche, **dadurch gekennzeichnet,** daß die ringspaltartige Düsenöffnung (10) gegenüber dem Außenrand der der Ringdüse (1) zugewandten öffnung der Ausnehmung (16) radial nach innen versetzt (38) ist und die geschlossenen Blasformteile (19) den die Düsenöffnung (10) nach außen überragenden Bereich der Ausnehmungs-öffnung freilassen.

7. Vorrichtung nach Anspruch 6, **dadurch gekennzeichnet,** daß die Innenwand (39) der geschlossenen Blasformteile (19) an den Außenrand der der Ringdüse (1) zugewandten Ausnehmungsöffnung anschließt.

8. Vorrichtung nach Anspruch 6 oder 7, **dadurch gekennzeichnet,** daß die Innenwand (39) der geschlossenen Blasformteile (19) von dem Außenrand der ringspaltartigen Düsenöffnung (10) Abstand (40) aufweist.

9. Vorrichtung nach Anspruch 7 oder 8, **dadurch gekennzeichnet,** daß bei auf der Ringdüse (1) aufsitzender Abzugseinrichtung (13) ein ringartiger Fortsatz (33) der Ringdüse (1) in die Ausnehmung (16) ragt und in den ringartigen Fortsatz (33) eln Zapfen (24) der Abzugseinrichtung (13) ragt.

10. Vorrichtung nach Anspruch 7, 8 oder 9, **dadurch gekennzeichnet,** daß die Breite der ringspaltartigen Düsenöffnung (10) beim Auspressen höchstens ebenso groß ist wie der Abstand des Außenrandes der Düsenöffnung (10) vom Außenrand der der Ringdüse (1) zugewandten öffnung der Ausnehmung (16).

## Claims

1. Apparatus for manufacturing a hollow article made of thermoplastics material, having a head piece formed by injection moulding and a body part formed by blowing a preform portion in one piece with the said head piece, wherein a tubular die (1) has a die orifice (10) in the form of an annular gap between a die cone (3) and a die nozzle (2), wherein the tubular die (1) and a draw-off device (13) with a recess (16) are reciprocable relative to each other in the axial direction, wherein the blow-mould parts (19) of a multipart blow mould are laterally displaceable in reciprocating fashion, wherein a displaceable mandrel (25) is provided with an elongation (48) and wherein the die orifice in the form of an annular gap is displaced radially outwards in relation to the outer contour of the elongation (48), characterised in that the mandrel (25) with the elongation (48) projects between regions (53) - associated with the preform portion - of the closed blow-mould parts (19) and the regions (53) - associated with the elongation (48) - of the closed blow-mould parts (19) each project in relation to the remainder of the associated blow-mould part (19), in that the elongation (48) in the regions (53) associated with the preform portion is designed as a forming tool for fashioning the internal shape of a body-part region having a reduced diameter in relation to the preform diameter, and in that when the blow-mould parts (19) are closed, the projecting regions (53) press the preform (36) against the forming elongation (48).

2. Apparatus according to claim 1, characterised in that the displaceable mandrel (25) forms the blowing device having a blow opening (8).

3. Apparatus according to claim 1 or 2, characterised in that a displaceable plunger (50) is mounted opposite the forming elongation (48) and a preform region can be pressed between the free ends of the forming elongation (48) and the plunger (50).

4. Apparatus according to claim 3, characterised in that the forming elongation (48) is provided on the draw-off device and the plunger (50) is provided on the tubular die (1).

5. Apparatus according to any one of the preceding claims, characterised in that even when the draw-off device (13) rests on the tubular die (1), the forming elongation (48) projects in the axial direction and is pushed into one of the two named devices.

6. Apparatus according to any one of the preceding claims, characterised in that the die orifice (10) in the form of an annular gap is displaced (38) radially inwards in relation to the outer edge of the opening of the recess (16) facing the tubular die (1) and the closed blow-mould parts (19) leave open the region of the recess opening projecting outwards over the die orifice (10).

7. Apparatus according to claim 6, characterised in that the inner wall (39) of the closed blow-mould parts (19) abuts against the outer edge of the recess opening facing the tubular die (1).

8. Apparatus according to claim 6 or 7, characterised in that the inner wall (39) of the closed blow-mould parts (19) is at a distance (40) from the outer edge of the die orifice (10) in the form of an annular gap.

9. Apparatus according to claim 7 or 8, characterised in that when the draw-off device (13) rests on the tubular die (1), an annular elongation (33) of the tubular die (1) projects into the recess (16) and a journal (24) of the draw-off device (13) projects into the annular elongation (33).

10. Apparatus according to claim 7, 8 or 9, characterised in that during extrusion the breadth of the die orifice (10) in the form of an annular gap is at most as great as the distance of the outer edge of the die orifice (10) from the outer edge of the opening of the recess (16) facing the tubular die (1).

## Revendications

1. Dispositif pour la fabrication d'un corps creux composé d'une matière synthétique thermoplastique et possédant une pièce de tête formée par moulage par injection, et une partie corps formée par soufflage d'un segment de pré-ébauche qui est d'une seule pièce avec elle ; dans lequel une buse annulaire (1) présente une ouverture (10) de buse en forme de fente annulaire comprise entre un cône (3) de buse et une pièce de bouche (2) de buse ; dans lequel la buse annulaire (1) et un dispositif de tirage (13) muni d'un évidement (16) peuvent se déplacer l'un par rapport à l'autre en mouvement alternatif dans la direction axiale ;
dans lequel des parties (19) d'un moule de soufflage en plusieurs parties sont mobiles en mouvement latéral alternatif ;
dans lequel il est prévu un mandrin (25) mobile en mouvement alternatif muni d'un prolongement (48) ; et
dans lequel l'ouverture de buse en forme de fente annulaire est décalée radialement vers l'extérieur par rapport au contour extérieur du prolongement (48) ;
caractérisé en ce que le mandrin (25) est engagé par son prolongement (48) entre des régions (53), associées au segment de pré-ébauche, des parties (19) du moule de soufflage placées en position fermée, et les régions (53), associées au prolongement (48), des parties (19) du moule de soufflage placées en position fermée font saillie chacune par rapport au reste de leur partie (19) respective du moule de soufflage ;
en ce que le prolongement (48) est constitué, dans les régions (53) associées au segment de pré-ébauche, par un outil de moulage servant à mouler la forme intérieure d'une région de la partie corps qui possède un diamètre réduit relativement au diamètre de la pré-ébauche ; et
en ce que, lorsque les parties (19) du moule de soufflage sont fermées, les régions saillantes (53) pressent la pré-ébauche (36) contre le prolongement de moulage (48).

2. Dispositif selon la revendication 1, caractérisé en ce que le mandrin (25) mobile en mouvement alternatif forme le dispositif de soufflage muni de l'ouverture de soufflage (8).

3. Dispositif selon la revendication 1 ou 2, caractérisé en ce que, face au prolongement de moulage (48), est agencé un poinçon (50) mobile en mouvement alternatif, et une région de la pré-ébaucne peut être pressée entre les extrémités libres du prolongement de moulage (48) et le poinçon (50).

4. Dispositif selon la revendication 3, caractérisé en ce que le prolongement de moulage (48) est prévu sur le dispositif de tirage et le poinçon (50) sur la buse annulaire (1).

5. Dispositif selon une des revendications précédentes, caractérisé en ce que le prolongement de moulage (48) fait saillie dans la direction axiale même lorsque le dispositif de tirage (13) est appuyé sur la buse annulaire (1) et est enfoncé dans un de ces deux organes.

6. Dispositif selon une des revendications précédentes, caractérisé en ce que l'ouverture (10) de buse en forme de fente annulaire est déportée radialement vers l'intérieur (38) par rapport au bord extérieur de l'ouverture de l'évidement (16) qui est dirigé vers la buse annulaire (1) et les parties (19) du moule de soufflage, placées en position fermée, dégagent la région de l'ouverture de l'évidement qui déborde vers l'extérieur au-delà de l'ouverture (10) de buse.

7. Dispositif selon la revendication 6, caractérisé en ce que la paroi intérieure (39) des parties (19) du moule de soufflage placée en position fermée se raccorde au bord extérieur de l'ouverture de l'évidement qui est dirigée vers la buse annulaire (1).

8. Dispositif selon la revendication 6 ou 7, caractérisé en ce que la paroi intérieure (39) des parties (19) du moule de soufflage placées en position fermée présente une certaine distance d'écartement (40) pàr rapport au bord extérieur de l'ouverture (10) de buse en forme de fente annulaire.

9. Dispositif selon la revendication 7 ou 8, caractérisé en ce que, lorsque le dispositif de tirage (13) est appuyé sur la buse annulaire (1), un prolongement annulaire (33) de la buse annulaire (1) est engagé dans l'évidement (16) et un téton (24) du dispositif de tirage (13) est engagé dans le prolongement annulaire (33).

10. Dispositif selon la revendication 7, 8 ou 9, caractérisé en ce qu'au moment de l'extrusion, la largeur de l'ouverture (10) de buse en forme de fente annulaire est au maximum aussi grande que la distance entre le bord extérieur de l'ouverture (10 de buse et le bord extérieur de l'ouverture de l'évidement (16) qui est dirigée vers la buse annulaire (1).
